Europäisches Patentamt

(19) European Patent Office

Office européen des brevets

(11) Publication number: **0 021 616**
**B1**

(12) **EUROPEAN PATENT SPECIFICATION**

(45) Date of publication of patent specification: **23.06.82**

(21) Application number: **80301774.8**

(22) Date of filing: **29.05.80**

(51) Int. Cl.³: **C 10 G 11/04,**
**B 01 J 23/86, B 01 J 21/20,**
**B 01 J 29/38**

(54) **Catalytic cracking process.**

(30) Priority: **11.06.79 US 47503**

(43) Date of publication of application:
**07.01.81 Bulletin 81/1**

(45) Publication of the grant of the patent:
**23.06.82 Bulletin 82/25**

(84) Designated Contracting States:
**DE FR GB NL**

(56) References cited:
**US - A - 3 926 778**

(73) Proprietor: **MOBIL OIL CORPORATION**
**150 East 42nd Street**
**New York New York 10017 (US)**

(72) Inventor: **Gross, Benjamin**
**1693 Blue Jay Lane**
**Cherry Hill Camden County New Jersey (US)**

(74) Representative: **Cooper, John Anthony**
**Mobil Court 3 Clements Inn**
**London WC2A 2EB (GB)**

Courier Press, Leamington Spa, England.

Catalytic cracking process

This invention is concerned with the processes for catalytic cracking of hydrocarbon stock to produce hydrocarbons of lower molecular weight, such as gasolines, jet fuels, diesel oils, etc. It is not concerned with hydrocracking. Catalytic cracking of gas oils inherently results in the deposition of significant amounts of a carbonaceous material generally referred to as coke on the catalyst, thereby resulting in a decline of activity of said catalyst which must be compensated for by frequent regeneration of the same by burning off said coke at elevated temperatures in a regenerator. The art is well aware that among the products resulting from the combustion of coke are carbon monoxide and carbon dioxide. The art is also aware that a combustion of the carbon monoxide to carbon dioxide generates more heat which, in turn, may be able to be absorbed by the catalyst being regenerated and introduced back into the cracking reaction. This is particularly important since a cracking reaction is endothermic, whereas a regeneration reaction is exothermic. The art is also aware that enhancing the CO oxidation in the regenerator can also have benefits with regard to the fact that the catalyst being regenerated can have its residual coke reduced to such a low level that its activity and selectivity for the catalytic cracking of gas oil becomes considerably enhanced. The art is also well aware of the so-called afterburning phenomenon wherein too high a concentration of carbon monoxide in the regenerator can cause excessive temperatures which can lead to potential damage of both catalyst and equipment. Prior art workers approached the problem of controlling afterburning in a number of ways which can be broadly classified as catalytic techniques and non-catalytic techniques. As examples of non-catalytic techniques of controlling afterburning, one can include such common prior art procedures as utilizing steam injection in order to limit temperature or limiting the amount of carbon monoxide in contact with oxygen such that oxidation of carbon monoxide to carbon dioxide could not take place. Catalytic ways of controlling afterburning include the addition of materials known to have catalytic activity for the oxidation of carbon monoxide to carbon dioxide. One of the earliest materials utilized was chromium oxide and, in fact, a commercial catalyst utilizing chromium oxide to control afterburning was developed and is disclosed in US—A—2,647,860. However, catalysts useful for the oxidation of carbon monoxide to carbon dioxide are also hydrogenation/dehydrogenation catalysts and, as is well known in the art, it is not desirable to have a hydrogenation/dehydrogenation catalyst in a non-hydro-genative cracking process since these materials usually promote the dehydrogenation of gas oil which leads to excessive coke and hydrogen formation. Thus, until quite recently, the prior art catalysts represented a compromise between the oxidation function which was desirable in order to enhance the conversion of carbon monoxide to carbon dioxide and hydrogenation/dehydrogenation function which was undesirable.

A dramatic breakthrough in this area has recently been made, involving the use of trace amounts of certain platinum group metals or rhenium. Quite unexpectedly, it was discovered that these Group VIII metals could be used in such low quantities that they would have effective activity for the oxidation of carbon monoxide yet would have little dehydrogenation activity, so as not to seriously affect the cracking reaction. US—A—4,072,600; 4,088,568; and 4,093,535 describe this new technology.

The invention is thus based on the discovery that cobalt chromite and copper chromite can function in almost the same manner as the recently discovered platinum containing catalysts above referred to since they possess an extraordinarily high activity for CO oxidation yet can be used in such small amounts that their dehydrogenation activity is substantially minimized, and gasoline yield is maintained without excessive coke and hydrogen make. Although copper chromite and cobalt chromite are not as active as the platinum group metals they do provide an alternative to the use of these materials. Additionally, these catalysts have activities orders of magnitude higher than their individual components: a copper chromite catalyst has activity with regard to CO oxidation which is orders of magnitude higher than either copper oxide or chromium oxide. It is surprising that these very active catalysts can be used in such minute amounts such that they will retain their oxidation activity and yet their hydrogenation/dehydrogenation activity can be suppressed so as to not seriously affect the cracking reaction. The use of copper chromite, cobalt chromite or mixtures thereof provides flexibility with regard to complying with regulations controlling CO emissions to the atmosphere. Additionally, the use of these catalysts can provide greater flexibility with regard to heat which is capable of being recovered in a regeneration process in connection with controlling the cracking reaction.

The broad concept of adding copper chromite to the catalyst inventory of a cracking unit is old in the art and is disclosed in US—A—3,926,778. However, the lowest amount of oxidation catalyst which can be added in accordance with the teachings of that Specification is 1/10th weight percent, i.e. 1,000 ppm. The novel process of this invention is concerned with adding substantially less chromite to the total catalyst inventory, i.e. no more than 500 ppm and more preferably about 50—150 ppm. It has been discovered that unless the copper chromite concentration in the circulating catalyst inventory of a cracking unit is limited to no more than 500 ppm that unacceptable gas make will occur. It is noted that concentrations of from 1—50 ppm are also desirable, particularly at high regenerator temperatures.

The catalysts which can be used in the catalytic cracking of gas oil, both by fluidized-bed and moving-bed techniques, are well known in the art and include catalysts containing silica, alumina, magnesia, zirconia, clay and combinations thereof. Particularly preferred cracking catalysts are composites of an active crystalline aluminosilicate zeolite having a pore size greater than 0.6 nm in a porous matrix such as a clay-derived matrix. Other types of matrix include silica-alumina, magnesia, zirconia, and mixtures thereof. Catalysts of these types are known in the art and are disclosed in US—A—3,140,249; 3,140,251; 3,140,252; and 3,140,253. A particularly important cracking catalyst comprises rare earth exchanged zeolite Y in a clay matrix, having a sodium content of less than about 1 weight percent.

The particular method of adding copper chromite, cobalt chromite, or mixtures thereof to the circulating catalysts inventory is not critical. The copper and cobalt chromite may be a component of all of the catalyst particles of only some of the catalyst particles. In terms of its concentrations in the entire system, it must be present in a large enough proportion to be able to effect the reaction of carbon monoxide with oxygen to carbon dioxide provided the conditions in the regenerator are otherwise sufficient to support this combustion, i.e. sufficiently high temperature and sufficient air. Yet it must not be present in a proportion so large that it substantially adversely affects the operation on the cracking side of the process. In this regard, it is important to note that in some instances it may be desirable to cause substantially all of the carbon burned in the regenerator to be oxidized to carbon monoxide. In other instances, it may be desirable to cause only part of the carbon to be oxidized to carbon dioxide and permit some substantial amount to be oxidized only to carbon monoxide. The present invention permits the refiner to select the exact amount of heat to be generated in the regenerator as a function of efficient carbon monoxide burning. Because of the inherent advantages stemming from the invention, the refiner is able to increase the regenerator temperature by burning some of the carbon monoxide therein, burning the rest outside the regenerator; for example, in a steam generating CO boiler. Quite obviously, the preferred embodiments of this invention reside in burning all of the carbon monoxide within the regenerator since this obviates the need of a CO boiler which may be necessary in order to meet the various governmental environmental regulations concerning CO emission to the atmosphere. As has previously been set forth, increasing the temperature in the regenerator reduces the residual coke of regenerated catalyst and increases the activity of the regenerated catalyst which is an added advantage in cracking operation.

A convenient method of adding copper or cobalt chromite to the circulating catalyst inventory of a cracking unit is to form a mixture of copper or cobalt chromite with an inorganic oxide such as alumina and to add the alumina containing the copper or cobalt chromite or mixture thereof either to the cracking catalyst per se or any component thereof prior to introduction of the same into the cracking unit. Another method of adding the oxidation catalyst to the cracking unit is to introduce the alumina-containing cobalt or copper chromite directly into a cracking unit which already contains cracking catalyst, such introduction being accomplished either by adding it to the regenerator or to the cracking unit. Inorganic oxides other than alumina can of course be used, and the inorganic oxide can either be catalytically active or inactive with regard to the cracking reaction. Other suitable materials include silica-alumina, silica-magnesia, clays, etc.

The expression copper chromite as used throughout the specification and the claims designates a well known class of compounds whose formula is usually expressed $XCuO . Cr_2O_3$, wherein X is from 0.5 to 2.5. This material is well known in the art and is disclosed in various US—A, such as 3,767,595; 3,374,184; and 3,899,466.

The following examples will illustrate the novel process of this invention.

Example 1

Copper chromite extrudates containing about 18.6 weight percent copper chromite, balance alumina (9.3 weight percent copper as copper oxide and 9.3 weight percent chromiun as $Cr_2O_3$) were calcined for three hours in air at 760°C (1400°C) and ground to a fluid size range material, i.e. from 40 to 150 $\mu$m. The copper chromite was then blended with commercial fluid cracking catalyst Super D (reg. trademark), manufactured by the Davidson Chemical Division of W. R. Grace & Company, comprising a 16% rare earth exchanged zeolite Y, balance a clay matrix. The commercial fluid cracking catalyst analyzed as follows:

| | |
|---|---|
| Silica | 61 weight percent |
| Alumina | 29.9 weight percent |
| Sodium | 0.59 weight percent |
| Rare earth oxide | 3.04 weight percent |

The commercial fluid cracking catalyst was steamed for four hours at 760°C (1400°F) with 100% steam at 101.4 kPa (0 psig) prior to the addition of the copper chromite. The copper chromite was added in sufficient quantities to give two catalysts, one containing 100 ppm copper chromite and the other 1000 ppm of copper chromite. The copper chromite catalyst, together with a blank containing only the commercial cracking catalyst were evaluated for both their catalytic cracking activity and selectivity by using them to crack a wide cut mid-continent gas oil at an initial temperature of 501.7°C (935°F), a catalyst-to-oil ratio of 3 and at 8.33 weight hourly space velocity.

Following the above cracking test, the catalysts were then evaluated for their CO oxidation activity in accordance with the following procedure.

The coked catalyst from the cracking runs was blended with clean burnt catalyst of the same type to 0.65 weight percent coke on catalyst and regenerated at 657.3°C (1215°F) with air at a flow rate of 215 ccm per minute. The combustion gases are continuously monitored and an overall carbon dioxide to carbon monoxide ratio is calculated. Additionally, a simulated flue gas containing carbon monoxide, carbon dioxide and excess oxygen was passed over the above at a flow rate of 215 ccm per minute and CO conversion determined.

The results of the cracking tests and the CO oxidation tests are shown below:

Table I
Effect of copper chromite addition to cracking catalyst

| Copper Chromite | 0 | +100 ppm | +1000 ppm |
|---|---|---|---|
| Cat/oil | 3.00 | 2.99 | 3.00 |
| WHSV | 8.33 | 8.35 | 8.33 |
| Reaction Temp, °C (°F) | 494.5 (922) | 493.8 (921) | 493.9 (921) |
| Conversion, % Vol. | 79.9 | 79.7 | 79.3 |
| $C_5$+ Gasoline, % Vol. | 61.1 | 60.2 | 60.1 |
| Total $C_4$, % Vol. | 18.5 | 19.3 | 19.8 |
| Dry Gas, % Wt. | 9.6 | 9.6 | 9.0 |
| Coke, % Wt. | 4.74 | 4.60 | 4.72 |
| C-on-Cat, Final, % Wt. | 1.33 | 1.32 | 1.34 |
| N-$C_5$, % Vol. | 1.1 | 1.0 | 0.8 |
| I-$C_5$, % Vol. | 10.1 | 9.7 | 9.8 |
| $C_5$=, % Vol. | 2.6 | 2.3 | 2.1 |
| N-$C_4$, % Vol. | 2.8 | 2.8 | 2.8 |
| I-$C_4$, % Vol. | 10.4 | 10.9 | 11.1 |
| $C_4$=, % Vol. | 5.4 | 5.7 | 5.8 |
| $C_3$, % Vol. | 4.9 | 4.9 | 4.5 |
| $C_3$=, % Vol. | 7.9 | 8.0 | 7.2 |
| $C_2$, % Wt. | 0.6 | 0.6 | 0.6 |
| $C_2$=, % Wt. | 0.7 | 0.7 | 0.7 |
| $C_1$, % Wt. | 0.5 | 0.5 | 0.5 |
| $H_2$, % Wt. | 0.05 | 0.06 | 0.08 |
| $H_2S$, % Wt. | 0.17 | 0.20 | 0.21 |
| Hydrogen Factor | 35 | 39 | 53 |
| Recovery, % Wt. | 93.8 | 95.3 | 94.9 |
| Alkylate, % Vol. | 22.1 | 22.6 | 21.6 |
| $C_5$+ Gasoline+Alkylate, % Vol. | 83.2 | 82.8 | 81.7 |
| Outside I-$C_4$, % Vol. | 4.9 | 4.9 | 3.8 |
| RON+O, Raw Gaso. | 88.1 | 88.4 | 88.1 |
| MON+O, Raw Gaso. | 0.0 | 79.6 | 0.0 |
| RON+O, $C_5$+Gaso. | 87.5 | 87.9 | 87.8 |
| RON+O, $C_5$+Gaso.+Alkylate | 89.2 | 89.5 | 89.4 |

Reference to Table I will show that the addition of the copper chromite at both 100 and 1000 ppm did not substantially affect the conversion and only decreased the $C_5$+ gasoline make by about 1 volume percent. The hydrogen factor went from only 35 without any copper chromite to 39 with 100 ppm of copper chromite. However, the addition of 1000 ppm of copper chromite resulted in a hydrogen factor of 53—a commercially unacceptable level.

The CO oxidation results, i.e. Table II, show that at 100 ppm, copper chromite substantially affected the percent of carbon monoxide converted, i.e. from 10% without any copper chromite to 93% with only 100 ppm of copper chromite.

Table II
Co oxidation activity of copper chromite containing catalyst

| Catalyst | $CO_2/CO$ | % CO conversion |
|---|---|---|
| Super D | 0.8 | 10 |
| Super D+100 ppm $CuCr_2O_7$ | 67 | 93 |
| Super D+1000 ppm $CuCr_2O_7$ | 59 | 98 |

4

The following example will show that extremely small amounts of copper chromite are effective to control CO emission. Comparisons are made between a commercial cracking catalyst having no added oxidation promoter and the same commercial catalyst with about 3.3 parts per million of platinum and with 10 parts per million of copper chromite.

Example 2

A commercial aluminosilicate zeolite catalyst used in cracking a hydrocarbon charge in a moving bed cracking operation is mixed with alumina beads containing 0.22 weight percent platinum at 0.15% by weight of total catalyst (3.3 ppm platinum) and the mixture is passed through a conventional regenerator used for TCC catalyst regeneration. As a comparison, the same used zeolite catalyst is also mixed with alumina containing 0.5 weight percent copper chromite at concentration of 0.2% by weight (10 ppm copper chromite).

Evaluation of oxidizing pellets in regeneration

Both the platinum and the copper chromite are evaluated in the following regeneration process: In a regenerator kiln, air is introduced in two streams, both from the center side with 7.79 m³/s (16,500 c.f.m.) directed upwardly and 6.74 m³/s (14,280 c.f.m.) directed downwardly. The catalyst is passed down from the top at a rate of 680.75 t/h (670 tons per hour) and it contains about 0.649% by weight of carbon (average). The air temperature is 282.3°C (540°F) at each inlet; the outlet temperature is 473.9°C (885°F). The cross-sectional area of the kiln is 43.01 m² (463 sq. ft.). The gas outlets are located at the top of the kiln, just below the plenum area, and at the bottom of the kiln column.

The results are shown in the following table:

Table

| Type of pellet | Position of outlets | CO | $O_2$ | $CO_2$ | % CO decrease |
|---|---|---|---|---|---|
| None | Top | 8.79 | 0.80 | 0.80 | — |
| | Bottom | 5.06 | 7.85 | 8.66 | — |
| Copper Chromite | Top | 6.46 | 0.15 | 10.12 | 26.5 |
| | Bottom | 3.19 | 6.20 | 11.20 | 37.0 |
| Platinum | Top | 4.74 | 0.03 | 11.2 | 46.1 |
| | Bottom | 1.24 | 4.32 | 13.9 | 75.4 |

The above clearly demonstrates the effectiveness of extremely low amounts of copper chromite, i.e. 10 ppm, in oxidizing carbon monoxide.

**Claims**

1. A process for the catalytic cracking of gas oil to produce products boiling in the motor fuel range, wherein said gas oil is contacted with a porous acidic solid catalyst in a cracking vessel at elevated temperature and in the absence of added hydrogen so as to convert said gas oil to lower molecular weight products with deposit of coke on said catalyst, the coked catalyst being transferred to a regeneration vessel in which oxidation of said coke proceeds in the presence of air with generation of carbon monoxide and carbon dioxide, and the regenerated catalyst at elevated temperature is transferred from said regeneration vessel to said cracking vessel to catalyze further cracking and supply at least part of the heat of reaction required by said cracking, said process comprising conducting said cracking and said regeneration with an inventory of solid, porous, acidic cracking catalyst particles and particles of an oxidation catalyst comprising copper chromite and/or cobalt chromite, and limiting the concentration of said oxidation catalyst to an amount great enough to promote oxidation of CO and inadequate to substantially increase the generation of coke and hydrogen in said reaction vessel as compared with a like catalyst free of such metal, said amount being less than 500 parts per million based on total catalyst inventory.

2. A process according to Claim 1 wherein said solid porous acidic cracking catalyst comprises a crystalline aluminosilicate zeolite having a pore size greater than 0.6 nm.

3. A process according to Claim 1 or Claim 2, wherein copper chromite is present in an amount ranging from 50—150 parts per million.

4. A process according to Claim 1 or Claim 2, wherein cobalt chromite is present in an amount ranging from 50—150 parts per million.

5. A process according to Claim 1 or Claim 2, wherein cobalt chromite is present in amount ranging from 1—50 parts per million.

5

**0021616**

**Revendications**

1—Procédé pour le craquage catalytique de gas-oil pour produire des produits bouillant dans la gamme des carburants, dans lequel gas-oil est mis en contact avec un catalyseur solide acide poreux dans un récipient de craquage à température élevée et en l'absence d'hydrogène ajouté, de façon à transformer ledit gas-oil en produits de poids moléculaire plus bas avec dépôt de coke sur ledit catalyseur, le catalyseur encrassé par le coke étant transféré dans un récipient de régénération dans lequel l'oxydation dudit coke s'effectue en présence d'air avec formation de monoxyde de carbone et de dioxyde de carbone, et le catalyseur régénéré à température élevée est transféré dudit récipient de régénération audit récipient de craquage pour catalyser à nouveau le craquage et fournir au moins une partie de la chaleur de réaction nécessaire audit craquage, ledit procédé comprenant la réalisation dudit craquage et de ladite régénération avec une charge de particules de catalyseur de craquage acide poreux solide et de particules d'un catalyseur d'oxydation comprenant du chromite de cuivre et/ou du chromite de cobalt, et la limitation de la concentration dudit catalyseur d'oxydation à une quantité suffisamment élevée pour favoriser l'oxydation de CO et inappropriée pour accroître de façon importante la formation de coke et d'hydrogène dans ledit récipient de réaction par rapport à un catalyseur semblable dépourvu d'un tel métal, ladite quantité étant inférieure à 500 parties par million par rapport à la charge totale de catalyseur.

2—Procédé selon la revendication 1, dans lequel ledit catalyseur de craquage acide poreux solide comprend une zéolite cristalline de type aluminosilicate ayant une taille des pores supérieure à 0,6 nm.

3—Procédé selon l'une des revendications 1 ou 2, dans lequel le chromite de cuivre est présent en une quantité comprise entre 50 et 150 parties par million.

4—Procédé selon l'une des revendications 1 ou 2, dans lequel le chromite de cobalt est présent en une quantité comprise entre 50 et 150 parties par million.

5—Procédé selon l'une des revendications 1 ou 2, dans lequel le chromite de cuivre est présent en une quantité comprise entre 1 et 50 parties par million.

**Patentansprüche**

1. Verfahren zum katalytischen Cracken von Gasöl zur Erzeugung von Produkten, die im Motor-Brennstoffbereich sieden, wobei das Gasöl mit einem porösen sauren festen Katalysator in einem Crackgefäß bei erhöhter Temperatur und in Abwesenheit von zugesetztem Wasserstoff in Berührung gebracht wird und das Gasöl in niedermolekulare Produkte unter Niederschlagung von Kohlenstoff bzw. Koks auf dem Katalysator umgewandelt wird, der mit Koks bzw. Kohlenstoff belandene Katalysator in ein Regenerierungsgefäß übergeführt wird, worin Oxidation des Koks- bzw. Kohlenstoffmaterials in Gegenwart von Luft unter Erzeugung von Kohlenmonoxid und Kohlendioxid erfolgt, und der regenerierte Katalysator bei erhöhter Temperatur aus dem Regenerierungsgefäß zum Crackgefäß zur Katalyse von weiterem Cracken und Lieferung wenigstens eines Teils der durch das Cracken erforderlichen Reaktionswärme übergeführt wird, und wobei das Verfahren die Durchführung des Crackens und der Regenerierung mit einem Einsatzmaterial aus festen porösen sauren Crackkatalysatorteilchen und Teilchen von einem Oxidationskatalysator, enthaltend Kupferchromit und/oder Kobaltchromit, umfaßt und wobei die Konzentration des Oxidationskatalysators auf eine Menge beschränkt ist, die zur Oxidationsförderung von CO genügend groß und zur wesentlichen Steigerung der Erzeugung von Koks bzw. Kohlenstoff und Wasserstoff in dem Reaktionsgefäß im Vergleich mit einem entsprechenden, von einem solchen Metall freien Katalysator unzureichend ist, und wobei die Menge weniger als 500 ppm, bezogen auf das Gesamtkatalysatoreinsatzmaterial, beträgt.

2. Verfahren nach Anspruch 1, dadurch gekennzeichnet, daß der feste poröse saure Crackkatalysator einen kristallinen Aluminosilicatzeolithen mit einer Porengröße von mehr als 0,6 nm umfaßt.

3. Verfahren nach Anspruch 1 oder 2, dadurch gekennzeichnet, daß Kupferchromit in einer Menge im Bereich von 50 bis 150 ppm vorhanden ist.

4. Verfahren nach Anspruch 1 oder 2, dadurch gekennzeichnet, daß Kobaltchromit in einer Menge im Bereich von 50 bis 150 ppm vorhanden ist.

5. Verfahren nach Anspruch 1 oder 2, dadurch gekennzeichnet, daß Kobaltchromit in einer Menge im Bereich von 1 bis 50 ppm vorhanden ist.